# EUROPÄISCHE PATENTSCHRIFT

(11) **EP 0 992 420 B1**
(45) Veröffentlichungstag und Bekanntmachung des Hinweises auf die Patenterteilung: **07.04.2004**
(21) Anmeldenummer: 99116846.9
(22) Anmeldetag: 03.09.1999
(51) Int. Cl.: B62D 25/08

(54) **Kraftfahrzeug mit vormontierter Montageeinheit**
Motorcar with preassembled mounting unit
Véhicule automobile avec unité de montage préassemblée

(30) Priorität: 08.10.1998 DE 19846401
(43) Veröffentlichungstag der Anmeldung: 12.04.2000
(73) Patentinhaber: Volkswagen Aktiengesellschaft, 38436 Wolfsburg (DE)
(72) Erfinder: Hoffmann, Bernd, 38106 Braunschweig (DE)

(56) Entgegenhaltungen:
- DE-A- 3 143 503
- DE-A- 4 424 288
- FR-A- 2 554 408
- US-A- 2 206 306

## Beschreibung

Die Erfindung betrifft ein Kraftfahrzeug mit vormontierter Montageeinheit gemäß Oberbegriff des Anspruchs 1 sowie ein Montageverfahren gemäß Oberbegriff des Anspruchs 9.

Die Vormontage von Baugruppen für Kraftfahrzeuge ist allgemein bekannt. So ist aus der DE 33 15 646 A1 eine vormontierte Baugruppe für den Cockpit-Bereich von Kraftfahrzeugen bekannt, die mehrere Aggregate beinhaltet und als Ganzes von oben in die Karosserie eines Fahrzeugs einsetzbar ist.

Weiterhin ist aus der gattungsgemäßen DE 44 06 989 A1 eine Vormontageeinheit für ein Frontmotor-Kraftfahrzeug bekannt, die außer einer Spritzwand auch kastenartige Aufnahmebereiche für beispielsweise ein Motorsteuergerät oder eine Batterie besitzt. Diese Vormontageeinheit bildet ebenfalls ein komplexes Einbauteil, das von oben in den Motorraum eingesetzt wird. Eine vormontierbare Einbaueinheit, die im Bereich der Stirnwand einer Fahrgastzelle eines Kraftfahrzeugs zum Einsatz kommt, ist aus der DE 40 05 090 A1 bekannt.

Es ist außerdem bekannt, in der Stirnwand einer Fahrgastzelle Durchlässe für eine funktionale Verbindung von Bauteilen in der Fahrgastzelle mit Bauteilen im Motorraum vorzusehen. So ist es aus der DE 195 24 165 A1 bekannt, Einbaumodule mit darin zusammengefaßten Funktionselementen in derartige Durchlässe der Stirnwand einer Fahrgastzelle einzusetzen, wobei ein solcher Einbaumodul eine Pedalgruppe oder ein elektronisches Steuergerät umfassen kann. Der in der Stirnwand jeweils vorgesehene Durchlaß wird von einem an dem jeweiligen Einbaumodul ausgebildeten Wandbereich dicht abgeschlossen.

Aus der FR-A-2 554 408 ist es bekannt, daß eine Montageeinheit von der Fahrgastzelle her auf die der Fahrgastzelle zugewandten Seite der Wandung des Wasserkastens im Randbereich einer Öffnung aufgesetzt ist.

Der Erfindung liegt die Aufgabe zugrunde, ein Kraftfahrzeug mit vormontierter Montageeinheit zu schaffen, die in Verbindung mit im Fahrzeug unterzubringenden Einbauteilen eine Montageerleichterung mit sich bringt.

Die Lösung dieser Aufgabe erhält man durch die im Anspruch 1 aufgeführten Merkmale. Die Montageeinheit hat eine für die Vormontage wenigstens eines Einbauteils in Form einer Batterie vorgesehene Grundplatte und ein daran abstehendes Wandstück, so daß die Montageeinheit mit dem Einbauteil in eine unterhalb der Windschutzscheibe des Kraftfahrzeugs im Wasserkastenbereich vorgesehene Öffnung einsetzbar ist und diese Wasserdicht abschließt. Ein schwergewichtiges Einbauteil in Form einer Fahrzeugbatterie, ist sehr einfach auf der Grundplatte der Montageeinheit vormontiert, bevor dann die Montageeinheit durch die Öffnung im Wasserkasten eingeschoben wird. Die Montage wird dadurch erleichtert, daß eine solche im Wasserkastenbereich vorgesehene Öffnung von der Fahrgastzelle aus sehr leicht zugänglich ist und somit auch eine mit einem schwergewichtigen Einbauteil bestückte Montageeinheit problemlos in das Kraftfahrzeug eingebaut werden kann.

Die Montageeinheit besitzt vorzugsweise eine mit dem Rand der Öffnung korrespondierende umlaufende Dichtung, die am Rand der Montageeinheit angespritzt sein kann. Grundsätzlich besteht aber auch die Möglichkeit, eine solche Dichtung separat oder am Rand des Wasserkastens vorzusehen. Demgegenüber stellt jedoch die an der Montageeinheit vorgesehene Dichtung eine weitere Montageerleichterung dar.

Die Montageeinheit ist erfindungsgemäß auf die der Fahrgastzelle zugewandte Seite der Wandung des Wasserkastens im Randbereich aufgesetzt. Somit kann sich zwischen dem Randbereich der Montageeinheit und der Wand des Wasserkastens ein Dichtungselement erstrecken und beim Festschrauben der Montageeinheit abdichtend gegen die Wandung des Wasserkastens gepreßt werden.

Zur Befestigung von Einbauteilen sind erfindungsgemäß an der Montageeinheit Halterungen angeformt oder in anderer Weise vorgesehen, um eine exakte und schnelle Montage der anzubringenden Einbauteile vornehmen zu können.

Der Aufbau der Montageeinheit ist besonders einfach, wenn diese im Querschnitt als L-förmiges Teil mit angeformten Befestigungslaschen und/oder Befestigungsstegen ausgebildet ist, wobei dann am Wasserkasten eine entsprechend geformter Wandabschnitt ausgespart ist, damit die sich dadurch im Wasserkasten ergebende Öffnung dicht von der einzusetzenden Montageeinheit abgeschlossen werden kann. Die Montageeinheit kann aber auch als wannenförmiges oder kastenförmiges Teil ausgebildet sein, um ein darin montiertes Einbauteil seitlich vollständig zu umschließen. Dabei ist die Montageeinheit vorzugsweise aus Kunststoff oder Leichtmetall gefertigt, um ein möglichst geringes Gewicht bei gleichzeitig hoher Stabilität für die Montageeinheit zu erhalten.

Der Erfindung liegt weiterhin die Aufgabe zugrunde, ein Montageverfahren zum Montieren einer vormontierbaren Montageeinheit in einem Kraftfahrzeug anzugeben, welches möglichst einfach durchführbar sein soll.

Die Lösung dieser Aufgabe erhält man mit den im Anspruch 9 aufgeführten Merkmalen. Ein auf der Montage einzubringendes Einbauteil wird auf einer stabilen Grundplatte der Montageeinheit befestigt, die dann von der Fahrgastzelle aus in bzw. an einer Öffnung einer zwischen Fahrgastzelle und Motorraum sich erstreckende Wandung des Wasserkastens ein- bzw. aufgesetzt wird. Dabei wird das auf der Montageeinheit vormontierte Einbauteil durch die Öffnung in den Wasserkasten geschoben, so daß dann die Montageeinheit befestigt und wasserdicht mit dem Rand der Öffnung verbunden werden kann. Insbesondere bei der Montage einer Kraftfahrzeugbatterie ergeben sich hierbei große Montageerleichterungen, da das umständliche Hineinheben der Kraftfahrzeugbatterie in den Motorraum durch das wesentlich leichtere seitliche Einschieben von der Fahrgastzelle aus ersetzt wird. Durch die Vormontage auf der Grundplatte der Montageeinheit sind die daran vorgesehenen Halterungen für die Kraftfahrzeugbatterie optimal zugänglich, so daß sich insgesamt eine beträchtliche Montageerleichterung ergibt.

Die Erfindung wird nachfolgend anhand von in der Zeichnung dargestellten Ausführungsbeispielen näher erläutert.

Es zeigen:
- Figur 1: den vereinfachten Querschnitt des unterhalb der Windschutzscheibe eines Kraftfahrzeugs befindlichen Wasserkastens mit angebrachter Montageeinheit,
- Figur 2: einen Höhenschnitt entlang der Schnittlinie A-A von Figur 1 und
- Figur 3: eine vereinfachte Darstellung mit einer im wesentlichen L-förmig ausgebildeten Montageeinheit.

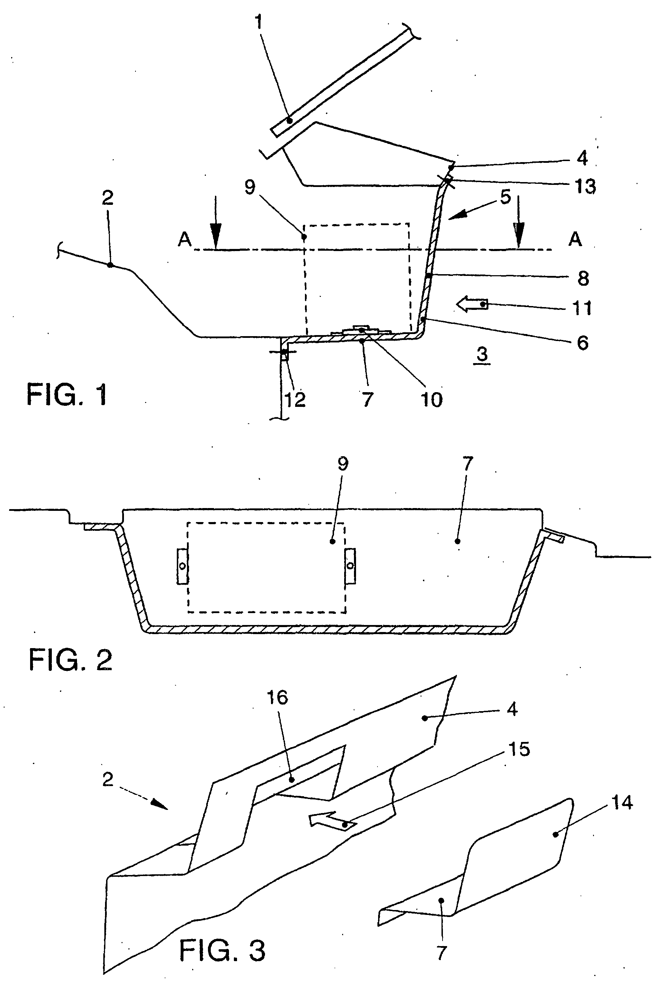

In Figur 1 ist unterhalb der Windschutzscheibe 1 eines Kraftfahrzeugs der Wasserkasten 2 angeordnet, der an der zum Fahrgastraum 3 weisenden Stirnwand 4 eine Öffnung 5 hat, an der eine Montageeinheit 6 befestigt ist.

Die Montageeinheit 6 besitzt eine Grundplatte 7 und ein daran nach oben abstehendes Wandstück 8. Auf der Grundplatte 7 ist ein Einbauteil in Form einer hier mit unterbrochenen Linien dargestellten Fahrzeugbatterie 9 befestigt. Hierzu sind auf der Grundplatte 7 Halterungen 10 angeordnet, die die Fahrzeugbatterie 9 sicher an der Grundplatte 7 fixieren.

Die Fahrzeugbatterie 9 wurde vor dem Einsetzen der Montageeinheit 6 auf der Grundplatte 7 montiert. Erst dann wurde die derart vormontierte Montageeinheit 6 entsprechend der Pfeilrichtung 11 von der Fahrgastzelle 3 aus zusammen mit der Fahrzeugbatterie 9 in die Öffnung 5 entsprechend der dargestellten Position eingesetzt, so daß die an der Montageeinheit 6 umlaufenden Ränder 12, 13 dicht mit den Wasserkasten 12 verbunden werden konnten. Die Ränder 12, 13 können zu diesem Zweck mit den angrenzenden Wandungen des Wasserkastens 2 verschraubt sein, wobei sich zwischen den Rändern 12, 13 und den korrespondierenden Wandbereichen des Wasserkastens 2 eine einliegende, hier nicht sichtbare Dichtung erstrecken kann.

Die Montageeinheit 6 kann ein wannenförmiges, kastenförmiges oder auch L-förmiges Teil sein; so daß-das oder die jeweils auf deren Grundplatte befestigten Einbauteile teilweise oder auch allseitig umschlossen sein können.

Der in Figur 2 dargestellte Horizontalschnitt gemäß der Schnittlinie A-A von Figur 1 zeigt die Grundplatte 7 von oben mit der darauf befestigten Fahrzeugbatterie 9.

In der stark vereinfachten perspektivischen Darstellung von Figur 3 ist nochmals eine im wesentlichen L-förmige Montageeinheit 14 gezeigt, die entsprechend der Pfeilrichtung 15 an einer Öffnung 16 einer Stirnwand 4 angebracht werden kann. Die Stirnwand 4 kann dabei im oberen Bereich einen Teil der Wandung des Wasserkastens 2 gemäß Figur 1 bilden.

Die Montageeinheit 14 kann vor der Befestigung an der Stirnwand 4 mit einem oder mehreren Einbauteilen bestückt werden, so daß dann die derart vormontierte Montageeinheit 14 von der Fahrgastzelle aus an der Stirnwand 4 befestigt werden kann, wobei die Einbauteile, die auf der Grundplatte 7 nach oben abstehen, durch die Öffnung 16 in den Bereich des Wasserkastens 2 hineingeschoben werden. Ist die Montageeinheit nicht als L-förmiges Teil, sondern als wannen- oder kastenförmiges Teil ausgebildet, so ragt die gesamte Montageeinheit in den Wasserkasten 4 hinein.

### BEZUGSZEICHENLISTE

- 1: Windschutzscheibe
- 2: Wasserkasten
- 3: Fahrgastraum
- 4: Stirnwand
- 5: Öffnung
- 6: Montageeinheit
- 7: Grundplatte
- 8: Wandstück
- 9: Fahrzeugbatterie
- 10: Halterung
- 11: Pfeilrichtung
- 12: Rand
- 13: Rand
- 14: Montageeinheit
- 15: Pfeilrichtung
- 16: Öffnung

## Patentansprüche

1. Kraftfahrzeug mit vormontierter Montageeinheit (6, 14) für Einbauteile, wobei die Montageeinhet (6, 14) Halterungen (10) zur Befestigung einer Fahrzeugbatterie (9) aufweist, wobei an der Montageeinheit (6,14) wenigstens ein Einbauteil in Form einer Fahrzeugbatterie (9) vormontiert ist, bevor die Montageeinheit (6, 14) in eine Öffnung (5, 16) der Stirnwand (4) zwischen Motorraum und Fahrgastzelle (3) des Kraftfahrzeugs eingesetzt wird, **dadurch gekennzeichnet, daß** die Montageeinheit (6,14) eine für die Vormontage eines Einbauteils vorgesehene Grundplatte (7) und ein daran abstehendes Wandstück (8) hat, und daß die Montageeinheit (6, 14) eine sich unterhalb der Windschutzscheibe (1) im Wasserkastenbereich erstreckende Öffnung (5, 16) wasserdicht abschließt und daß die Montageeinheit (6, 14) auf die der Fahrgastzelle (3) zugewandten Seite der Wandung des Wasserkastens (2) im Randbereich der Öffnung (5) ein- bzw. aufgesetzt ist.

2. Kraftfahrzeug nach Anspruch 1, **dadurch gekennzeichnet, daß** die Montageeinheit (6,14) eine mit dem Rand der Öffnung (5, 16) korrespondierende umlaufende Dichtung hat.

3. Kraftfahrzeug nach Anspruch 1 oder 2, **dadurch gekennzeichnet, daß** am Rand (12, 13) der Montageeinheit (6, 14) eine umlaufende Dichtung angespritzt ist.

4. Kraftfahrzeug nach einem der vorhergehenden Ansprüche, **dadurch gekennzeichnet, daß** die Montageeinheit (14) ein im Querschnitt L-förmiges Teil mit angeformten Befestigungslaschen und/oder Befestigungsstegen ist.

5. Kraftfahrzeug nach einem der Ansprüche 1 bis 3, **dadurch gekennzeichnet, daß** die Montageeinheit (6) ein wannenförmiges oder kastenförmiges Teil ist.

6. Kraftfahrzeug nach einem der vorhergehenden Ansprüche, **dadurch gekennzeichnet, daß** die Montageeinheit (6, 14) aus Kunststoff oder Leichtmetall gefertigt ist.

7. Montageverfahren zum Montieren einer vormontierbaren Montageeinheit (6, 14) in einem Kraftfahrzeug nach einem der vorhergehenden Ansprüche, **dadurch gekennzeichnet, daß** das Einbauteil zuerst auf eine Grundplatte (7) der Montageeinheit (6) montiert wird, daß dann die Montageeinheit (6, 14) von der Fahrgastzelle (3) her in bzw. an einer Öffnung (5) einer sich zwischen Fahrgastzelle (3) und Motorraum erstreckenden Wandung des Wasserkastens (2) ein- bzw. aufgesetzt wird, wobei das auf der Montageeinheit (6, 14) vormontierte Einbauteil durch die Öffnung (5) geschoben wird, und daß dann die Montageeinheit (6) befestigt und wasserdicht mit dem Rand der Öffnung (5) verbunden wird.

## Claims

1. Motor vehicle with a preassembled assembly unit (6, 14) for installation parts, the assembly unit (6, 14) having mounts (10) for the fastening of a vehicle battery (9), at least one installation part in the form of a vehicle battery (9) being preassembled on the assembly unit (6, 14) before the assembly unit (6, 14) is inserted into an opening (5, 16) in the end wall (4) between the engine compartment and passenger cell (3) of the motor vehicle, **characterized in that** the assembly unit (6, 14) has a baseplate (7), which is provided for the preassembly of an installation part, and a wall piece (8) protruding thereon, and **in that** the assembly unit (6, 14) closes an opening (5, 16), which extends in the water-tank region below the windscreen (1), in a watertight manner, and **in that** the assembly unit (6, 14) is placed in or on that side of the wall of the water tank (2) which faces the passenger cell (3) in the edge region of the opening (5).

2. Motor vehicle according to Claim 1, **characterized in that** the assembly unit (6, 14) has an encircling seal corresponding to the edge of the opening (5, 16).

3. Motor vehicle according to Claim 1 or 2, **characterized in that** an encircling seal is injection-moulded onto the edge (12, 13) of the assembly unit (6, 14).

4. Motor vehicle according to one of the preceding claims, **characterized in that** the assembly unit (14) is a part which is L-shaped in cross section and has integrally formed fastening tabs and/or fastening webs.

5. Motor vehicle according to one of Claims 1 to 3, **characterized in that** the assembly unit (6) is a trough-shaped or box-shaped part.

6. Motor vehicle according to one of the preceding claims, **characterized in that** the assembly unit (6, 14) is manufactured from plastic or light metal.

7. Assembly method for fitting a preassemblable assembly unit (6, 14) in a motor vehicle according to one of the preceding claims, **characterized in that** the installation part is first of all fitted onto a baseplate (7) of the assembly unit (6), **in that** the assembly unit (6, 14) is then placed from the passenger cell (3) in or on an opening (5) in a wall of the water tank (2), which wall extends between the passenger cell (3) and engine compartment, the installation part preassembled on the assembly unit (6, 14) being pushed through the opening (5), and **in that** the assembly unit (6) is then fastened and connected in a watertight manner to the edge of the opening (5).

## Revendications

1. Véhicule automobile, avec une unité de montage préassemblée (6, 14) pour pièces à intégrer, l'unité de montage (6, 14) étant munie de fixations (10) pour fixer une batterie de véhicule (9), au moins une pièce à intégrer sous forme d'une batterie de véhicule (9) étant préalablement montée sur l'unité de montage (6, 14), avant que l'unité de montage (6, 14) ne soit insérée dans un orifice (5, 16) de la paroi frontale (4) entre le compartiment moteur et la cellule passager (3) du véhicule automobile, **caractérisé en ce que** l'unité de montage (6, 14) est munie d'une plaque de fond (7) prévue pour le montage préalable d'une pièce à intégrer et d'une pièce de paroi (8), qui part de cette dernière en s'écartant et **en ce que** l'unité de montage (6, 14) se termine de manière étanche par un orifice (5, 16) s'étendant sous le pare-brise (1), dans la région du réservoir d'eau et **en ce que** l'unité de montage (6, 14) est insérée ou posée sur le côté de la paroi du réservoir d'eau (2) qui est tourné vers la cellule du passager (3), dans la région de bordure de l'orifice (5).

2. Véhicule automobile selon la revendication 1, **caractérisé en ce que** l'unité de montage (6, 14) est munie d'une garniture d'étanchéité périphérique, correspondant avec le bord de l'orifice (5, 16).

3. Véhicule automobile selon l'une quelconque des revendications 1 ou 2, **caractérisé en ce qu'**une garniture d'étanchéité périphérique est injectée sur le bord (12, 13) de l'unité de montage (6, 14).

4. Véhicule automobile selon l'une quelconque des revendications précédentes, **caractérisé en ce que** l'unité de montage (14) est une pièce dont la section présente la forme d'un L, avec des languettes de fixation et/ou des barrettes de fixation formées par moulage.

5. Véhicule automobile selon l'une quelconque des revendications 1 à 3, **caractérisé en ce que** l'unité de montage (6) est une pièce en forme de cuve ou de caisson.

6. Véhicule automobile selon l'une quelconque des revendications précédentes, **caractérisé en ce que** l'unité de montage (6, 14) est fabriquée en matière plastique ou en métal léger.

7. Procédé de montage destiné à monter une unité de montage préassemblée (6, 14) dans un véhicule automobile selon l'une quelconque des revendications précédentes, **caractérisé en ce que** la pièce à intégrer est tout d'abord montée sur une plaque de fond (7) de l'unité de montage (6), **en ce qu'**ensuite à partir de la cellule passager (3), l'unité de montage (6, 14) est insérée ou appliquée sur ou dans un orifice (5) d'une paroi du réservoir à eau (2), laquelle s'étend entre la cellule passager (3) et le compartiment moteur, la pièce à intégrer préalablement montée sur l'unité de montage (6, 14) étant poussée à travers l'orifice (5), et **en ce que** l'unité de montage (6) est fixée et reliée de manière étanche avec le bord de l'orifice (5).
